# EUROPEAN PATENT APPLICATION

(11) **EP 1 956 385 A1**
(43) Date of publication of application: **13.08.2008**
(21) Application number: 07021552.0
(22) Date of filing: 06.11.2007
(51) Int. Cl.: G01S 1/00

(54) **Fast position fixing method for GPS navigator**

(30) Priority: 31.01.2007 KR 20070009987
(71) Applicant: Samsung Electronics Co., Ltd, Yeongtong-gu Suwon-si, Gyeonggi-do (KR)
(72) Inventor: Moon, Young Khon, Suwon-si Gyeonggi-do (KR)
(74) Representative: Boakes, Jason Carrington

(57) **Abstract**

A fast position fixing method for a Global Positioning System (GPS) navigator includes receiving, at an assistant device, GPS data from GPS satellites in response to a GPS data reception command, and transmitting the GPS data to the navigator, locating, at the navigator, the GPS satellites on the basis of the GPS data, and receiving, at the navigator, current GPS data from the located GPS satellites, computing a current position of the navigator on the basis of the current GPS data, and outputting the current position of the navigator.

## Description

### BACKGROUND OF THE INVENTION

### 1. Field of the Invention

The present invention relates generally to a Global Positioning System (GPS) navigator and, in particular, to a fast position fixing method for a GPS navigator by minimizing the Time To First Fixing (TTFF).

### 2. Description of the Related Art

The GPS is a navigation and precise positioning tool that has recently seen particularly wide use in such vehicles as airplanes, boats and cars.

Typically, GPS navigators can be classified into a stand-alone GPS navigator that calculates its location on the basis of the data received from satellites, and an assisted GPS navigator that uses an assistance server to decrease the time needed to determine a location.

As for the stand alone GPS, when the GPS navigator is turned off for a long time, updates are required for the GPS data, since the reliability of the GPS data stored in the navigator is degraded due to the changes of the navigator and the satellites during the turn-off time.

In order to receive the GPS data, the GPS navigator performs tracking and fixing satellites before receiving first positional fix.

Overall, with the stand-alone GPS navigator, it is a common problem that a long TTFF is required after a long turn-off time.

In order to reduce the TTFF, the Assisted GPS has been introduced. In the Assisted GPS, the GPS navigator accesses GPS data servers deployed in particular distances via the mobile communication network, and receives recent GPS data.

The Assisted GPS is advantageous in reducing TTFF and reception ability at low receive sensitivity.

However, the Assisted GPS has a drawback in that the data servers necessitate large investment costs and the usage of the cellular network for accessing the data servers causes additional service charges to the users.

In order to solve this problem, a costless wireless communication network such as Bluetooth® and Wireless Local Area Network (WLAN) has been proposed for replacing the cellular network. However, the costless network-based Assisted GPS has a shortcoming in that access to the GPS data server is very limited due to the coarse coverage areas of the short range wireless communication network.

### SUMMARY OF THE INVENTION

The present invention has been made in an effort to solve the above problems and provides a fast position fixing method for a GPS navigator, which method is capable of obtaining a rapid position fix using a portable assistant device without the assistance of a mobile network.

In accordance with an aspect of the present invention, the above and other objects are accomplished by a fast position fixing method for a GPS navigator, which method includes receiving, at an assistant device, GPS data from GPS satellites in response to a GPS data reception command, and transmitting the GPS data to the navigator, locating, at the navigator, the GPS satellites on the basis of the GPS data, and receiving, at the navigator, current GPS data from the located GPS satellites, computing a current position of the navigator on the basis of the current GPS data, and outputting the current position of the navigator.

### BRIEF DESCRIPTION OF THE DRAWINGS

The above and other objects, features and advantages of the present invention will be more apparent from the following detailed description in conjunction with the accompanying drawings, in which:
FIG. 1 illustrates a configuration of a GPS navigation system according to the present invention;
FIG. 2 illustrates a fast TTFF method for a GPS navigator according to the present invention; and
FIG. 3 illustrates a fast TTFF method for a GPS navigator according to the present invention.

### DETAILED DESCRIPTION OF THE PREFERRED EMBODIMENTS

Preferred embodiments of the present invention are described in detail with reference to the accompanying drawings. The same reference numbers are used throughout the drawings to refer to the same or like parts. Detailed descriptions of well-known functions and structures incorporated herein may be omitted herein for the sake of clarity and conciseness.

In the following description, a GPS navigator is provided with a portable assistant device that stores recently received GPS data, even when the GPS navigator is turned off, and provides the GPS navigator with the recently received GPS data when the GPS navigator is turned on again. In this invention, a remote controller may be used as the portable assistant device.

Even when the navigator is turned off (e.g., the ignition is turned off for in-vehicle navigator), the portable assistant device receives and stores the GPS data within storage. If the navigator is turned on, the navigator receives the GPS data from the portable assistant device through a wireless communication channel such as Infrared Data Association (IrDA). Accordingly, the navigator can obtain the GPS data from the portable assistant device without tracking the satellites for satellite locks, resulting in rapid TTFF.

In this embodiment, the GPS data transmission from the portable assistant device to the navigator can be performed in manual or automatic mode.

In the manual mode, the portable assistant device starts tracking and locks each satellite to receive the GPS data in response to a GPS data reception command input by a user. Also, the portable assistant device transmits the GPS data received from the satellite to the navigator in response to a GPS data request command input by the user.

In the automatic mode, the GPS data reception command is generated at the navigator when it is turned off and is transmitted to the portable assistant device. Upon receiving the GPS data reception command, the portable assistant device starts receiving the GPS data in place of the navigator. The turn-on event of the navigator generates and transmits the GPS data request command to the portable assistant device such that the portable assistant device provides the navigator with the GPS data received during the turn-off of the navigator. The GPS data is transmitted via a wireless communication link such as IrDA, Bluetooth® and WLAN.

The portable assistant device can be replaced by other handheld device such as, but not limited to, a mobile terminal equipped with a GPS function and a wireless communication function such as IrDA, Bluetooth® and WLAN.

The mobile terminal can be any of a cellular phone, Personal Digital Assistant (PDA), smart phone, digital broadcast receiver, Motion Picture Experts Group (MPEG) Layer Audio 3 (MP3) player and digital camera.

Also, the navigator can be any of an in-vehicle GPS receiver, cellular phone, PDA, smart phone, digital broadcast receiver, MP3 player, laptop computer and digital camera, supporting a GPS reception function and communication with the portable assistant device.

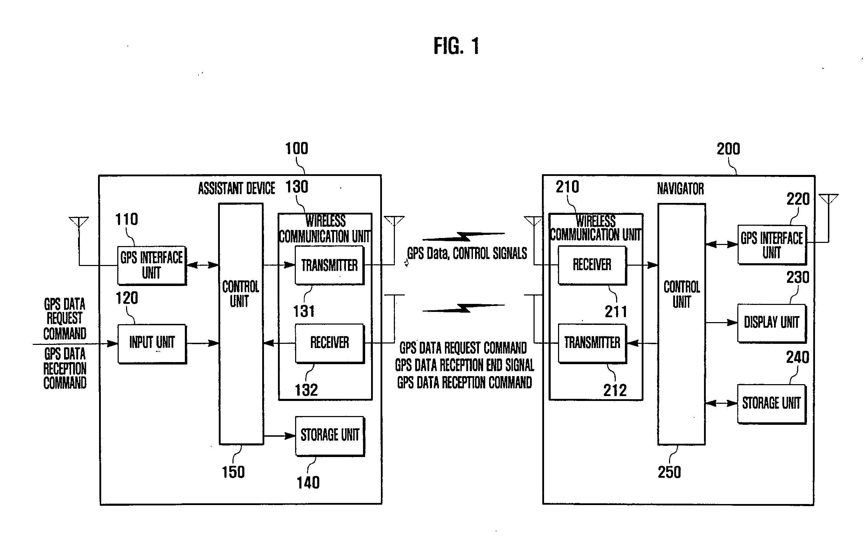

FIG. 1 illustrates a configuration of a GPS navigation system according to the present invention.

Referring to FIG. 1, the GPS navigation system includes a navigator 200 and a portable assistant device 100, which communicate with each other through a wireless link.

The portable assistant device 100 includes a GPS interface unit 110, an input unit 120, a wireless communication unit 130, a storage unit 140 and a control unit 150.

The GPS interface unit 110 receives the GPS data from satellites and transfers the GPS data to the control unit 150 under the control of the control unit 150. The GPS data includes ephemeris, almanac and GPS time.

The input unit 120 can be implemented with a touchpad or a keypad having a plurality of alphanumeric and function keys. Particularly, the input unit 120 is configured to receive the GPS data reception command and GPS data request command from the navigator in the manual mode and transfers the commands to the control unit 150. The input unit 120 also receives control signals input by a user and transfers the control signals (e.g., a navigator start signal) to the control unit 150 for controlling the navigator 200.

The wireless communication unit 130 includes a transmitter 131 and a receiver 132 operating under the control of the control unit 150.

The transmitter 131 transmits the GPS data received by the GPS interface unit 110 and the control signals generated by the input unit 120 to the navigator 200.

In the automatic mode, the receiver 132 receives the GPS data reception command, GPS data request command and transmission end request command from the navigator 200 and transfers the commands to the control unit 150.

In the manual mode, only the transmitter 131 is activated. This is because the portable assistant device 100 is driven by the GPS data reception and request commands, and transmission end command input by input unit 120 rather than received from the navigator 200.

The wireless communication unit 130 can be implemented with a wireless module that accords with a short-range wireless communication standard such as IrDA, Bluetooth® and WLAN.

The storage unit 140 stores the application programs and data for executing general operations of the portable assistant device 100. Particularly, the storage unit 140 stores the GPS data received by the GPS interface unit 110.

The control unit 150 controls general operations of the portable assistant device 100, such as receiving the GPS data from the satellites in response to the GPS data reception command input through the input unit 120 (in the manual mode) or received by the receiver 132 (in the automatic mode).

If the GPS data reception command is received, the control unit 150 activates and controls the transmitter 131 to transmit the GPS data to the navigator 200.

After transmitting the GPS data to the navigator 200 in the manual mode, the control unit 150 turns off the GPS interface unit 110 because the GPS data will be received by the navigator 200.

The navigator 200 includes a wireless communication unit 210, a GPS interface unit 220, a display unit 230, a storage unit 240 and a control unit 250.

The wireless communication unit 210 includes a receiver 211 and a transmitter 212 operating under the control of the control unit 250.

In the automatic mode, the transmitter 212 transmits the GPS data reception and request commands, and transmission end request command to the portable assistant device 100; and the receiver 211 receives the GPS data and navigator control signals (e.g., a navigator driving signal) and transfers the data to the control unit 250. In order to communicate with the portable assistant device 100, the wireless communication unit 210 is implemented with a wireless module that accords a short- range wireless communication standard such as IrDA, Bluetooth® and WLAN.

The GPS interface unit 220 starts receiving the GPS data from the satellite identified by the GPS data received from the portable assistant device 100 under the control of the control unit 250. The GPS data includes the Ephemeris, Almanac and GPS time.

The display unit 230 is implemented with a flat panel display such a Liquid Crystal Display (LCD) for displaying GPS application data and operation status of the navigator 200. Particularly, the display unit 230 displays the current location of the navigator 200 calculated by the control unit 250.

The storage unit 240 stores the application programs and data for executing operations of the navigator 200. Particularly, the storage unit 240 stores the GPS data received by the GPS interface unit 220.

The control unit 250 controls general operations of the navigator 200. If a navigator control signal such as a navigator driving signal is received from the portable assistant device 100, the control unit 250 controls the navigator 200 on the basis of the control signal. When the navigator 200 is turned on in the automatic mode, the control unit 250 of the navigator 200 controls the transmitter 212 to transmit the GPS data request command to the portable assistant device 100. If the GPS data is received from the portable assistant device 100, the control unit 250 of the navigator 200 locates the satellites and then transmits the transmission end command to the portable assistant device 100. After locating the satellites on the basis of the GPS data received from the portable assistant device 100, the control unit 250 controls the GPS interface unit 220 to track the satellites and receive GPS data from the satellites. The control unit 250 calculates the current location of the navigator 200 on the basis of the GPS data and displays the current location on the display unit 230. If a shut down command is input, the control unit 250 controls the transmitter 212 to transmit the GPS data reception command to the portable assistant device 100.

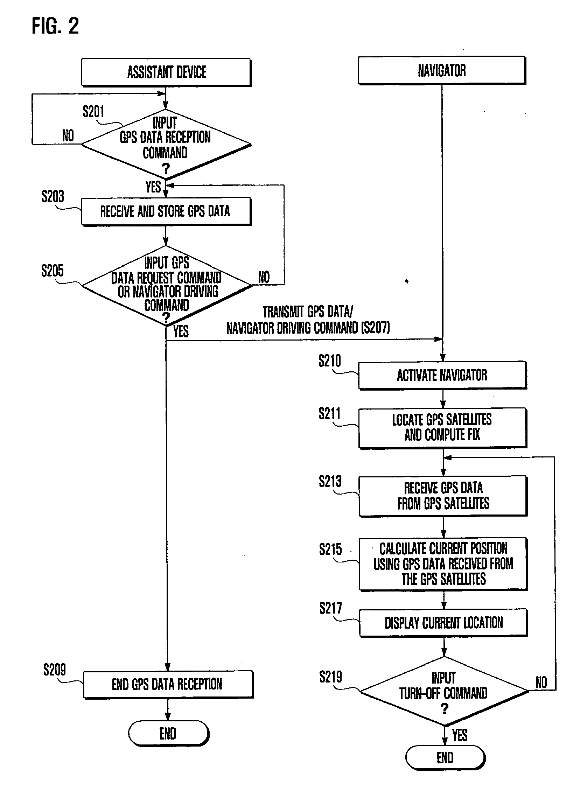

FIG. 2 illustrates a fast TTFF method for a GPS navigator according to the present invention. In this embodiment, the portable assistant device and the navigator operate in manual transmission mode.

Referring to FIGs. 1 and 2, the control unit 150 of the portable assistant device 100 determines whether a GPS data reception command is detected in step S201.

If a GPS data reception command is detected, the control unit 150 activates the GPS interface unit 110 to track and locate GPS satellites such that the portable assistant device 100 starts receiving and storing the GPS data from the satellites within the storage unit 140 in step S203.

The control unit 150 detects whether a GPS data request command or a navigator driving command is input through the input unit 120 in step S205. If no GPS data request command or the navigator driving command is input, the control unit 150 continues receiving the GPS data until the GPS data request signal and navigator driving signal are detected.

If a GPS data request command is detected at step S205, the control unit 250 controls the transmitter 131 to transmit the GPS data stored in the storage unit 140 and the navigator driving command to the navigator 200 in step S207. The navigator driving command is a signal for driving the navigator 200. Accordingly, when the navigator 220 has already been activated, the navigator driving command may not be transmitted.

After transmitting the GPS data, the control unit 150 of the portable assistant device 100 controls the GPS interface unit 110 to stop receiving the GPS data from the GPS satellites in step S209 until receiving the GPS data reception command.

If the navigator driving command and the GPS data are received from the portable assistant device 100, the navigator 200 is activated by the navigator driving command in step S210. The control unit 250 of the navigator 200 locates the GPS satellites and computes a fix on the basis of the GPS data received from the portable assistant device 100 in step S211 and then receives the GPS data from the GPS satellites (S213). Next, the control unit 250 of the navigator 200 computes a current position of the navigator 200 on the basis of the GPS data received from the GPS satellites in step S215 and displays the computed position on the screen of the display unit 230 in step S217. The current location can be output in the form of a visual presentation and/or an audible sound.

While displaying the position of the navigator 200 in real time, the control unit 250 of the navigator 200 detects whether a turn-off command is input in step S219. If a turn-off command is detected, the control unit 250 of the navigator 200 controls to end the operation of the navigator. If no turn-off command is detected, the control unit 250 repeats the steps S213 to S219. That is, the control unit 250 controls the navigator 200 to receive the GPS data from the GPS satellites, calculates the current position of the navigator 200, and updates a navigation screen in real time until the turn-off command is input.

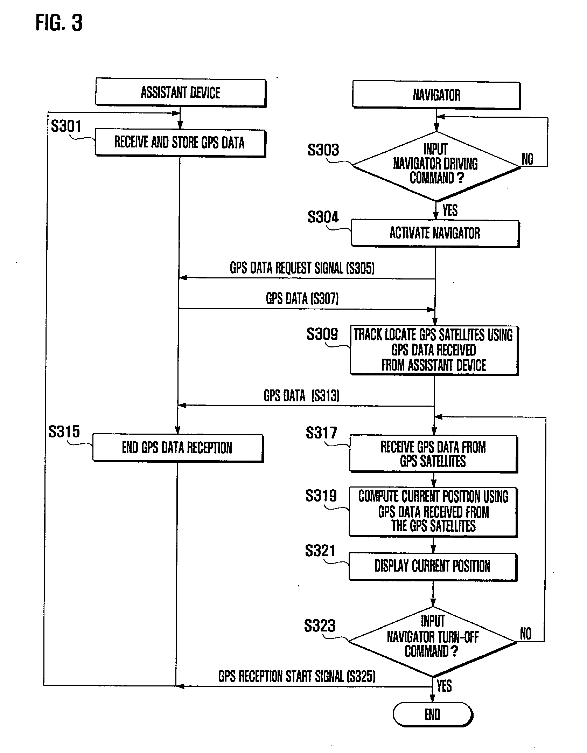

FIG. 3 illustrates a fast TTFF method for a GPS navigator according to the present invention. In this embodiment, the portable assistant device and the navigator operate in automatic transmission mode.

Referring to FIGs. 1 and 3, if a GPS reception command is received from the navigator 200, the control unit 150 of the portable assistant device 100 controls the GPS interface unit 110 to receive the GPS data from the GPS satellites and stores the received GPS data within the storage unit 140 in step S301.

The control unit 150 of the portable assistant device 100 updates the GPS data stored in the storage unit 140 with the GPS data received from the GPS data in real time before receiving a GPS data request command.

Meanwhile, the control unit 250 of the navigator 200 determines whether a navigator driving command is input in step S303. If a navigator driving command is input, the control unit 250 activates the navigator 200 S304.

Next, the control unit 250 of the navigator 200 controls the transmitter 212 to transmit the GPS data request command to the portable assistant device 100 S305.

If the GPS data request command is received from the navigator 200, the control unit 150 of the portable assistant device 100 controls to transmit the GPS data stored in the storage unit 140 to the navigator 200 in step S307.

The GPS data is received by the receiver 211 of the wireless communication unit 210 and the control unit 250 controls the GPS interface unit 220 to track and locate the GPS satellites on the basis of the GPS data received from the portable assistant device 100 in step S309.

If the locator 200 has successfully locate the GPS satellites, the control unit 250 of the navigator 200 controls the transmitter 212 of the wireless communication unit 210 to transmit the GPS data reception end signal to the portable assistant device 100 in step S313. If the GPS data reception end command is received, the control unit 150 of the portable assistant device 100 controls the GPS interface unit 100 to end the GPS data reception in step S315.

After locating the satellites, the control unit 250 of the navigator 200 starts receiving the GPS data from the GPS satellites in step S317. Next, the control unit 250 computes the current position of the navigator 2000 on the basis of the GPS data in step S319 and controls the display unit to display the current location in a graphical form in step S321.

While providing the current location information in real time, the control unit 250 of the navigator 200 detects whether a turn-off command is input in step S323. If a turn-off command is detected, the control unit 250 of the navigator 200 controls to transmit a GPS reception start signal to the remote control unit 100 in step S325 and ends the operation of the navigator 200. If no turn-off command is detected, the control unit 250 of the navigator 200 repeats steps S317 to S323. That is, the control unit 250 controls the navigator 200 to receive the GPS data from the GPS satellites, calculates the current position of the navigator 200 and updates a navigation screen in real time until the turn-off command is input. The navigator 200 transmits the GPS data stored in the storage unit 240 to the portable assistant device 100 before ending the operation of the navigator 200, such that the portable assistant device 100 can obtain a rapid satellite acquisition.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

As described above, the fast TTFF method for a GPS navigator is implemented with a portable assistant device that maintains the latest GPS data such that the GPS navigator can obtain the latest GPS data in first fixing process without accessing an assistant server, resulting in fast and reliable TTFF.

## Claims

1. A fast position fixing method for a Global Positioning System (GPS) navigator, comprising:
receiving, at an assistant device, GPS data from GPS satellites in response to a GPS data reception command, and transmitting the GPS data to the navigator;
locating, at the navigator, the GPS satellites on the basis of the GPS data; and
receiving, at the navigator, current GPS data from the located GPS satellites, computing a current position of the navigator on the basis of the current GPS data, and outputting the current position of the navigator.

2. The fast position fixing method of claim 1, wherein transmitting the GPS data comprises:
receiving a GPS data request command; and
transmitting the GPS data to the navigator in response to the GPS data request command.

3. The fast position fixing method of claim 2, wherein the GPS data is transmitted with a navigator driving signal.

4. The fast position fixing method of claim 3, wherein transmitting the GPS data further comprises ending, at the assistant device, reception of the GPS data.

5. The fast position fixing method of claim 1, wherein computing a current position of the navigator further comprises:
tracking the located GPS satellites and calculating a fix; and
updating the current position of the navigator on the basis of the fix.

6. The fast position fixing method of claim 1, wherein the GPS data includes ephemeris, almanac and GPS time.

7. The fast position fixing method of claim 1, wherein the GPS data is transmitted from the assistant device to the navigator through a wireless link established on the basis of a wireless communication standard.

8. The fast position fixing method of claim 7, wherein the wireless communication standard is any one of an Infrared Data Association (IrDA), Bluetooth® and Wireless Local Area Network (WLAN).

9. A fast position fixing method for a Global Positioning System (GPS) navigator, comprising:
receiving, at an assistant device, GPS data from GPS satellites and transmitting the GPS data to the GPS navigator;
locating, at the GPS navigator, the GPS satellites, computing a fix on the basis of the GPS data received from the assistant device, and receiving current GPS data from the located GPS satellites;
computing a current position of the navigator on the basis of the current GPS data and outputting the current position of the navigator.

10. The fast position fixing method of claim 9, wherein transmitting the GPS data further comprises:
receiving a GPS data request signal from the navigator; and
transmitting the GPS data to the navigator in response to the GPS data request signal.

11. The fast position fixing method of claim 10, wherein transmitting the GPS data further comprises:
sending, at the navigator, a transmission end request signal to the assistant device; and
ending, at the assistant device, transmission of the GPS data upon receiving the transmission end request signal.

12. The fast position fixing method of claim 11, further comprising:
receiving, at the navigator, a navigator turn-off command; and
transmitting a GPS data reception request signal to the assistant device.

13. The fast position fixing method of claim 9, wherein computing a current position of the navigator comprises:
tracking the located GPS satellites and calculating the fix; and
updating the current position of the navigator on the basis of the fix.

14. The fast position fixing method of claim 13, wherein the GPS data includes ephemeris, almanac and GPS time.

15. The fast position fixing method of claim 9, wherein the GPS data is transmitted from the assistant device to the navigator through a wireless link established on the basis of a wireless communication standard.

16. The fast position fixing method of claim 15, wherein the wireless communication standard is any one of an Infrared Data Association (IrDA), Bluetooth® and Wireless Local Area Network (WLAN).
